# EUROPEAN PATENT APPLICATION

(11) **EP 4 715 698 A1**
(43) Date of publication of application: **25.03.2026**
(21) Application number: 24202299.4
(22) Date of filing: 24.09.2024
(51) Int. Cl.: G06Q 10/06, G06Q 10/0633, G06Q 50/06, H02J 3/00, H02J 3/06

(54) **COMPUTER-IMPLEMENTED METHOD, SYSTEM, AND NON-TRANSITORY COMPUTER-READABLE STORAGE MEDIUM FOR CONTROLLING AN ELECTRIC POWER GRID**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The present disclosure provides a computer-implemented method for controlling an electric power grid, comprising the step of providing, by a workflow module, several workflows comprising subprocesses, each subprocess representing a data processing task, characterized in that at least one subprocess is used in different workflows.

The disclosure also provides a system and method for controlling an electric power grid.

## Description

The present invention relates to a computer-implemented method for controlling an electric power grid according to claim 1, a system for controlling an electric power grid according to claim 14, and a non-transitory computer-readable storage medium according to claim 15.

The first generation of grid control system software for the control center was developed in the 1970s. It uses server computers specially configured for this application, which were installed on-site in the computer room of the network operator's control center. The server computers were typically redundantly designed to ensure availability of the grid control system functionality for more than 99.999% of the time. In some cases, even today, the redundant server computers are installed at different locations to make the overall system even more resistant and, for example, to ensure control center functionality through the server computers at the other location even in the event of disasters such as earthquakes or fire at one location.

From the product brochure "Intelligent control center technology - Spectrum Power", Siemens AG 2017, Article-No. EMDG-B90019-00-7600, software for a so-called "Supervisory Control and Data Acquisition (SCADA)" system for use in a control center is known. SCADA systems have long been known for controlling and monitoring energy networks (Wikipedia permanent link: https://en.wikipedia.org/w/index.php?title=SCADA&oldid=858433181). Measurement values from sensors, for example from voltage measuring devices and current measuring devices in the energy network, are aggregated and transmitted to the control center. Control commands are sent to the energy network to control circuit breakers, tap changers of transformers, disconnectors and other controllable equipment in the energy network, as well as to control energy generators such as power plants. These control commands are received and processed by "Remote Terminal Units" (RTUs), "programmable logic controllers" (PLCs) and "intelligent electronic devices" (lEDs) to control the circuit breakers, disconnectors, etc. In the control center, a local data center is often provided on which the control center software, such as Spectrum Power, runs. The control center software is usually operated in a central computer arrangement, which can be designed as a data center with processors, data storage devices and screens. The term "central" refers to the fact that all measurement data from the energy network and all control commands for the energy network are processed centrally. Technicians are kept on standby around the clock in the control center to monitor the SCADA displays of the current operating status of the energy network and to take countermeasures such as shutting down a network section in the event of a fault.

A partial or complete design of the computer arrangement or the control center software as a cloud application, i.e. a server arrangement with decentrally distributed resources for data processing and data storage, which are connected via a data network such as the Internet, can also be carried out.

As a side effect of the ever-increasing spread of distributed energy generation, for example through photovoltaic systems or wind turbines, the determination of a system state of the energy network is made more difficult by the ever-increasing number of local energy generators feeding into the low and medium voltage network. In particular, recording the current state in the lower voltage levels (medium and low voltage) is becoming increasingly important because the networks in the lower voltage levels are more heavily loaded by the decentralized feed-ins.

Electric power distribution is the final stage in the delivery of electricity, traditionally comprising the delivery of electricity to households and small-scale industrial consumers. However, in recent years, the pool of energy resources connected to the distribution grid (distributed energy resources, DERs) has been substantially diversified, with further diversification underway. This diversification is owed predominantly to the integration of distributed power generation (e.g., renewable energy sources like solar PV) and of charging points for electric vehicles into the power distribution network, as well as due to heating electrification with the integration of heat pumps..

All these factors make it more difficult not only to determine the current network status but also to predict the future network status.

The dependence on weather influences is increasing because, for example, solar cells are strongly influenced by cloud cover and wind turbines by wind strength. These problems also have an impact on the next higher voltage level - a high-voltage energy transmission network - which is therefore more difficult to control and predict.

The operating personnel in a control center for an electrical energy network require software for evaluating measurement data so that, for example, a network state can be determined by means of a network analysis. For the typically meshed transmission network of the high-voltage or medium-voltage level, measurement data such as voltage, current, active power, reactive power and, if necessary, phase angle can usually be recorded for a large number of measuring points. Often the measurement data is even redundant, so that a high accuracy and reliability of the measurement data is achieved.

In the distribution network, on the other hand, which is typically assigned to the low-voltage level and partly also to the medium-voltage level, independent sub-networks with a radial structure are often provided, which are not comprehensively monitored with measuring devices. However, additional data from e.g. intelligent electricity meters (i.e. devices that can be read remotely via the Internet) can be taken into account.

Furthermore, software for data acquisition in a distribution network and for controlling this distribution network is known from the product brochure "Spectrum Power 7 v2.30 SP2 Distribution Network Applications " (hereinafter referred to as DNA), Siemens AG 2021, AS-DNA-EN, Edition 07.2021. The superordinate transmission network with higher nominal voltage is not taken into account, i.e. no interactions with this network are considered.

The numerous uncertainties induced by load diversification pose great challenges regarding the planning and stable operation of the distribution network. For example, fluctuations in electricity production and consumption, e.g., strongly volatile renewable energy production or irregular charging of electric vehicles, can in turn cause fluctuations in voltages and loading of distribution assets, eventually leading to an increased risk of network failure. distribution system operators (DSOs) can stabilize the network through operational interventions, i.e. with the help of control parameters. These may include changes to the network configuration (e.g., switch positions, on load tap changers (OLTC)) as well as interventions directly into load and generation (e.g., limiting maximal charging power of EV charging points). However, the corrective compensation of network instabilities may in some cases be expensive (due to the short time horizon) and comes with technical challenges (e.g., requiring real-time connectivity of assets).

To address these challenges, DSOs need to understand, limit, and reduce the risk of critical grid states sufficiently early ahead of time (e.g., 24 hours in advance for operational planning), which allows them to choose network control actions in a timely and cost-efficient manner.

In contrast to transmission systems most distribution systems show a lack in measurement information and therefore the system state can be known and forecasted only as a probability distribution. This is especially true since the future state of the network that needs to be controlled depends on uncertain parameters (e.g., behavior of customers, solar irradiance). Hence, this uncertainty needs first to be acknowledged and quantified. On the other hand, it is not required for grid operation to realize specific setpoints for power and voltage at given grid buses, but only to keep the state variable in a stable and save operating regime. Decision support thus needs to take into account the uncertainties mentioned above in order to meet that objective.

Up to now, the problem of reducing the likelihood of critical system states has primarily been the focus of network design and planning problems. Network planning, e.g., may be based on the formulation of an optimization problem with respect to power flow, with user-defined objectives (e.g., minimization of operation cost), configuration boundary conditions (e.g., network topology, renewable energy availability), and constraints (e.g., frequency and voltage safety boundaries). The optimization problem may be additionally complemented with reliability constraints (e.g., upper limit of inadequate energy supply, N-1 reliability constraints) and may be based on exemplary "worst case" load cases or may use a stochastic optimization approach to cover a larger set of scenarios. The solution to this optimization problem yields an optimal network configuration. In most cases, the planning of power distribution networks does not consider the impact of uncertainties due to load diversification. In the limited cases where uncertainty is considered, this concerns either a set of pertinent scenarios or worst-case analyses.

Furthermore, to address the problem described above, the adjustment of control parameters in operation, however, the mentioned approach cannot immediately be adapted: The required geographical resolution is much higher and the variability of scenarios that need to be considered is much larger. This makes a stochastic optimization approach as described above computationally infeasible given the limited amount of time available to decide if any interventions are required.

Instead, to reduce the risk of critical grid states in operation, DSOs often use pre-configured rule-based local control schemes (e.g., VoltVar control of solar PV, automatic operation of OLTCs). Furthermore, many interventions are initiated manually by operators, based on their experience and/or custom operation manuals. These schemes are very limited in their flexibility to react to changing situations in the grid and rely on expertise and experience of individual members of a DSOs staff, which makes it prone to suboptimal and inconsistent decisions, particularly in case of fluctuation and/or scarcity of qualified employees.

As can readily be understood from the examples presented above, there is an ever-increasing need for customization of workflows even after grid control software has been deployed to utility companies.

Based on known computer-implemented methods for controlling electric power grids, the present invention addresses the challenge of providing a standardized and at least partially automated workflow method that can effectively manage various grid scenarios while reducing reliance on operator expertise and manual interventions.

The invention solves this problem through a method according to claim 1.

While workflow management methods are for example known in the context of business-process-management, they have not yet been introduced into complex technical systems. Currently BPM systems are exclusively designed to assist in designing business processes such as complex payment systems and the like. It is a cornerstone of the invention to introduce this flexible customization approach into the technical domain of grid software solutions, allowing operators of utilities to reconfigure their grid control software by themselves in a easy and controllable fashion without the need to start an expensive and time-consuming programming project with manufacturer of the software.

To make use of the BPM mindset in the field of grid control software, the tasks defined in the subprocesses have to be of technical nature such a providing a software module for power flow calculations or grid state estimation (voltages and currents at every node are estimated). To perform the required automated calculations for each subprocess, i.e. input data such as grid topology are required, including grid equipment (transformers, switches, lines, etc.) with its voltage levels and power flow directions.

The following paragraphs provide examples of BPM approaches known in the business domain.

The document "Was ist Business Process Management_ _ IBM.pdf" provides an overview of Business Process Management (BPM) and its implementation in organizations. It defines BPM as a method to identify, model, analyze, measure, improve, and optimize business strategies and processes. The document outlines three main types of BPM: integration-oriented, human-oriented, and document-oriented, which align with the various aspects of the "workflow comprising multiple subprocesses" mentioned in the claim set. It describes the BPM lifecycle, including process design, modeling, execution, monitoring, and optimization, which corresponds to the "standardized and repeatable process" concept in the claims. The document also highlights BPM benefits such as increased efficiency, cost savings, improved employee and customer experience, and better scalability.

The document "Wie Sie Ihre Prozessautomatisierungsplattform zentralisieren _ Camunda.pdf" discusses the centralization of process automation platforms in organizations. It outlines a step-by-step approach to implementing a centralized automation strategy, which includes creating a proof of concept and lighthouse project, establishing an Automation Center of Excellence (CoE), and expanding the use of the automation platform across the organization. The document emphasizes the importance of standardized and repeatable processes.

The document "DE_Camunda-Compared-to-Alternatives-2022.pdf' compares Camunda's process automation platform to alternative solutions such as traditional BPM suites, low-code platforms, RPA tools, microservice orchestrators, and enterprise applications. It emphasizes Camunda's ability to provide end-to-end process orchestration, support for long-running processes, and process analysis and optimization capabilities. The document highlights Camunda's use of so-called BPMN and DMN standards for collaboration between business and IT stakeholders.

The following paragraphs elaborate on definitions for the technical terms used in the claim set. The definitions should not be understood as limiting to the disclosure, but rather as hinting on some ways of understanding implementations of the invention while not excluding interpretations not mentioned in the definitions. Accordingly, other implementations are within the scope of the following paragraphs.

Workflow: A workflow refers to a sequence of steps or processes designed to accomplish a specific task or goal within the grid management system. In the context of this invention, a workflow comprises multiple subprocesses, each representing a distinct data processing task.

Workflow module: The workflow module is a software component responsible for managing and executing the various workflows and subprocesses within the grid management system. It can be installed as a software module on a server or in a cloud environment. Alternatively, the workflow module can also be implemented as a hardware component in a computer system, comprising a processor, data storage, and communication interfaces.

Subprocess: A subprocess is an individual component of a larger workflow, representing a specific data processing task or operation within the grid management system. Subprocesses can be reused across different workflows, allowing for modular and efficient system design. Each subprocess can be implemented making use of a software module or as a dedicated hardware component in a computer system.

Grid control module: The grid control module is a software or hardware component responsible for performing automated calculations and determining necessary actions for grid management.

Data processing task: A data processing task refers to any operation performed on data within the grid management system, such as data analysis, transformation, or decision-making.

Electric power grid: The electric power grid refers to the network of interconnected components used to deliver electricity from producers to consumers. It includes power generation facilities, transmission lines, distribution systems, and various control and monitoring devices.

Cloud: In this context, a cloud refers to a network of remote servers hosted on the Internet used to store, manage, and process data. Cloud architecture typically involves distributed computing resources that can be scaled and accessed on-demand.

Server: A server is a computer or system that provides resources, data, services, or programs to other computers, known as clients, over a network. In the context of this invention, servers can host software modules for workflow management and grid control.

Communication module: A communication module is a software or hardware component responsible for facilitating data exchange between different parts of the grid management system. It can be implemented as a software module on a server, in a cloud environment, or as a dedicated hardware component in a computer system.

Data communication: Data communication refers to the exchange of data between different components of the grid management system. This can occur through various means, including:
1. Wire-bound methods:
   - Ethernet: A widely used local area network (LAN) technology
   - Power-line communication: Data transmission over existing power cables
2. Wireless methods:
   - 5G: Fifth-generation cellular network technology
   - 4G: Fourth-generation cellular network technology
   - Long-range radio: Radio communication over extended distances

These communication methods enable the transmission of digital data telegrams between modules, allowing for the seamless flow of information throughout the grid management system.

According to the inventive method, the subprocesses to include in the BPMN workflow for different types of grid management cases (e.g. outages, overload, maintenance) can be determined with a Decision Model and Notation (DMN). The DMN is used for automation of the decision-making processes. A static table including key-value pairs as DMN including case types as key and specific BPMN workflow as value can by applied. Whenever a new case type is introduced into the system, its case type and BPMN workflow needs to be added into DMN table.

Concurrent or overlapping grid management cases can be handled, too. A case is produced for a specific feeder area and if multiple equipment does have issues under same feeder, all of them are collected under same case. If a new equipment starts to have issues under the same feeder, the case is going to be updated with this information to cover all issues under the same case.

The invention as described in claim 1 offers several significant advantages over previous solutions for controlling electric power grids:
1. Standardization and Consistency: By providing several workflows comprising reusable subprocesses, the invention ensures a standardized approach to handling various grid management scenarios. This standardization leads to more consistent outcomes and reduces the risk of errors that can occur with ad-hoc, operator-dependent solutions.
2. Flexibility and Adaptability: The use of subprocesses that can be employed in different workflows allows for greater flexibility in addressing diverse grid management cases. This modular approach enables rapid adaptation to new scenarios or changing grid conditions without the need to develop entirely new workflows from scratch.
   The invention has the major advantage that even deployed grid control systems can be easily adapted by introducing new workflows by the operators of the utility company - by the customers themselves. This approach does not require launching a time-consuming and expensive customization project with the software manufacturer of the grid control software.
3. Efficiency and Time Savings: Reusing subprocesses across different workflows significantly reduces development time and effort. Instead of creating unique solutions for each new case type, operators can leverage existing, proven subprocesses to quickly assemble appropriate workflows. One of the metrics to measure improvements achieved by the invention can be how much time is required for solving a case. In the system, all operations related with a case are stored, and the processing time of a case can be easily calculated and compared to traditional methods. Other metrics can include the frequency of incorrect operation executions. In comparison, traditional methods rely heavily on operator experience and are expected to experience many more incorrect operation executions compared to the invention.
4. Reduced Reliance on Operator Expertise: By encapsulating complex procedures into standardized subprocesses, the invention reduces the dependence on individual operator knowledge and experience. This is particularly valuable in an industry facing challenges in finding and retaining highly experienced operators.
5. Improved Scalability: The modular nature of the workflows and subprocesses allows for easier scaling of grid management capabilities. As the complexity of grid systems grows, new subprocesses can be developed and integrated into existing workflows to address emerging challenges.
6. Enhanced Knowledge Management: The use of reusable subprocesses serves as a form of knowledge capture, preserving best practices and proven solutions in a structured, reusable format. This facilitates knowledge transfer within organizations and helps maintain operational consistency even as personnel changes occur.
7. Increased Automation Potential: The standardized nature of the workflows and subprocesses lends itself well to increased automation. This can lead to faster response times to grid issues and reduce the potential for human error in critical decision-making processes.
8. Improved Traceability and Auditing: Standardized workflows with clearly defined subprocesses make it easier to track and audit grid management actions. This can be crucial for regulatory compliance and continuous improvement efforts.
9. Cost-Effectiveness: By reducing development time, minimizing errors, and improving operational efficiency, the invention can lead to significant cost savings in grid management operations.
10. Enhanced Interoperability: The modular approach of using reusable subprocesses can facilitate better integration with existing grid management systems and potentially improve interoperability between different components of the grid infrastructure.

These advantages collectively contribute to a more robust, efficient, and adaptable approach to electric power grid management, addressing many of the challenges faced by modern grid operators in an increasingly complex and dynamic energy landscape.

With regard to claim 1, several workflows comprising subprocesses are provided by a workflow module, each subprocess representing a data processing task. This approach allows for a highly flexible and modular system for managing various grid scenarios. By utilizing subprocesses as building blocks, the method can efficiently handle different types of grid management cases while maintaining consistency and standardization. The use of a workflow module to provide these workflows ensures a centralized and organized approach to grid management.

At least one subprocess is used in different workflows. This reusability of subprocesses across different workflows is a key advantage of the invention. It allows for efficient development of new workflows by leveraging existing, proven subprocesses. For example, a subprocess for isolating an affected area of the grid could be used in workflows for handling both unplanned outages and planned maintenance. This reusability not only saves development time but also ensures consistency in how similar tasks are handled across different scenarios. Alternative implementations could include a library of subprocesses that can be easily selected and combined to create new workflows, or a visual workflow builder that allows operators to drag and drop subprocesses to create custom workflows.

Developing the method further, the system could use rule-based systems and/or machine learning models and/or optimization algorithms to determine the most effective subprocesses to combine in a new workflow. This multi-algorithm approach would allow the system to handle more complex grid topologies and scenarios, potentially improving the accuracy and efficiency of the proposed solutions. In this fully automated preparation of a suggested new workflow a machine learning model could be particularly useful because large datasets of already implemented workflows and how they performed in reaching their specific goals under various conditions or contingencies in the electrical grid are readily available to utility companies as training data.

The BPMN-powered workflow could be designed to integrate with a wider range of data sources beyond traditional grid management systems. This could include real-time weather data, social media feeds for outage reports, or loT sensor networks for more granular grid status information. By incorporating these diverse data streams, the system could provide more context-aware and proactive solutions for grid management cases.

The system could be enhanced with advanced reporting and analytics capabilities. This could include real-time dashboards showing the progress of ongoing case resolutions, historical performance analysis of different subprocess combinations, and predictive analytics to anticipate potential grid issues before they occur. These additional features would provide valuable insights for continuous improvement of the grid management process and help operators make more informed decisions.

In a further preferred embodiment of the inventive computer-implemented method, each workflow and its subprocesses are represented graphically by the workflow module, so that a user can combine the subprocesses to create novel workflows. This graphical representation enhances usability and allows for intuitive workflow creation. Operators can visually understand the flow of processes and easily identify opportunities for optimization or modification. Alternative implementations could include different visualization styles, such as flowcharts, swimlane diagrams, or even 3D representations for complex workflows. The system could also provide real-time visual feedback as workflows are executed, highlighting the current active subprocess.

The operator interface for executing calculated actions could be designed with multiple interaction methods. In addition to traditional mouse and keyboard inputs, the system could incorporate touch-screen functionality, voice commands, or even augmented reality interfaces for field operators. This would enhance usability in various operational environments and potentially reduce the time required for operators to acknowledge and execute actions.

In a further preferred embodiment of the inventive computer-implemented method, automated calculations are performed, by a grid control module, for determining necessary actions in at least some of the subprocesses. This automation reduces the reliance on manual calculations and operator judgment, leading to faster and more consistent decision-making. For example, in a subprocess for isolating a faulty section of the grid, the grid control module could automatically calculate the optimal switching operations to minimize the affected area. Alternative implementations could include machine learning algorithms that improve the accuracy of these calculations over time based on historical data and outcomes.

For example, the specific algorithms used to calculate the necessary actions for isolating affected areas and supplying temporary power can be selected from a group of established grid control algorithms. The area is isolated by running a traverse from the faulty island to the energized island. Temporary energization is calculated by traversing the grid to check which sections remain energized when a specific bay node is excluded, ensuring that island nodes stay powered during the process.

In a further preferred embodiment of the inventive computer-implemented method, the automated calculations include determining actions for isolating areas of the grid affected by an outage and supplying temporary power. This specific application of automated calculations addresses critical scenarios in grid management. The system could automatically identify the most efficient way to isolate a fault while minimizing customer impact, and determine the best sources and routes for temporary power supply. Alternative implementations could include consideration of factors such as available distributed energy resources, load priorities, and network constraints in these calculations.

In a further preferred embodiment of the inventive computer-implemented method, the workflows include safeguards to prevent incorrect operator execution of calculated actions. This feature enhances the safety and reliability of the grid management system. Safeguards could include confirmation prompts for critical actions, automatic checks against predefined safety limits, or real-time simulations to predict the outcomes of proposed actions. Alternative implementations could include a multi-level approval system for high-impact actions or integration with physical interlocks in the grid infrastructure.

In a further preferred embodiment of the inventive computer-implemented method, the workflows are adaptable to unexpected complications or deviations during the resolution process. This flexibility allows the system to handle real-world scenarios that may not perfectly match predefined workflows. For example, if a planned switching operation fails, the workflow could automatically suggest alternative actions or prompt the operator for manual intervention. Alternative implementations could include dynamic workflow adjustment based on real-time grid conditions or the ability to pause and modify workflows mid-execution.

The BPMN standard provides an excellent error handling methods that can be used on our workflows. One of the methods is transaction rollback which can be used to rollback process state to previous one if an error occurs on executing a task on BPMN workflow. The other method is to use retry policy automatically to retry the job again until policy does not allow. BPMN also provides BPMN error event concept that can be used to catch unexpected conditions and prepare a new flow for handling this kind of situation.

In a further preferred embodiment of the inventive computer-implemented method, the workflows integrate with existing grid management infrastructure and databases. This integration ensures that the new workflow system can leverage existing investments in grid management technology and data. For example, the workflows could access real-time SCADA data, historical performance records, or asset management databases to inform decision-making. Alternative implementations could include standardized APIs for easy integration with various third-party systems or the ability to operate in a hybrid mode with legacy systems during a transition period. A BPMN workflow is the main orchestrator in the system, and after building a BPMN workflow it will contain different kind of tasks (e.g. External Tasks). External tasks are executed at another part of the system which does have access to grid management infrastructure and databases.

In a further preferred embodiment of the inventive computer-implemented method, the method further comprises maintaining and updating a knowledge base of common solutions and subprocesses over time. This ongoing maintenance ensures that the system remains effective and up-to-date as grid technologies and best practices evolve. The knowledge base could be updated based on successful resolutions of grid issues, operator feedback, or analysis of system performance data. Alternative implementations could include a collaborative platform for operators to share and refine subprocess designs or an Al-driven system that suggests optimizations based on observed patterns.

In a further preferred embodiment of the inventive computer-implemented method, the workflow allows for customization for different grid operators or regions. This customization capability ensures that the system can be adapted to the specific needs and regulatory requirements of different grid operators or geographical regions. For example, workflows could be tailored to accommodate different voltage levels, grid topologies, or local operational procedures. Alternative implementations could include a modular configuration system that allows operators to enable or disable specific features based on their needs, or templates for common regional grid configurations that can be further customized.

In a further preferred embodiment of the inventive computer-implemented method, the necessary actions are used, by the grid control module, to control the electric power grid by sending control signals to at least one of the following controllable devices: transformers with adjustable on-load tap changers, switchgear, controllable loads, controllable generators, capacitor banks, connected distributed energy resources with flexibility of load and/or generation. Necessary actions could for example include regulating electricity demand by switching off loads through control of switchgear. This is advantageous because it employs the improved workflows generated with the inventive method in the operation of the grid to ensure grid stability (frequency and voltage stay within allowable deviations at all nodes).

In a further preferred embodiment of the inventive computer-implemented method, operator acknowledgment for execution of actions is required at predefined points in the workflows. This verification step has the advantage of making sure that no actions detrimental to safety and grid stability are taken.

In a further preferred embodiment of the inventive computer-implemented method, the workflow is implemented using a Business Process Modelling approach. As explained above, a BPM approach is an easy and proven framework for reconfiguring workflows in data processing.

In a further preferred embodiment of the inventive computer-implemented method, the subprocesses include at least one of: confirming a case, isolating an affected area, supplying temporary power, fixing a fault, and restoring energization. These subprocesses are advantageous because they allow for implementing a variety of different workflows in grid management software, e.g. outage management and maintenance.

Based on known systems for controlling electric power grids, the present invention addresses the challenge of providing a standardized and at least partially automated workflow system that can effectively manage various grid scenarios while reducing reliance on operator expertise and manual interventions.

The invention solves this problem through a system for controlling an electric power grid according to claim 14, whereby the same advantages as initially explained for the inventive computer-implemented method apply analogously.

Based on known non-transitory computer-readable storage mediums for controlling electric power grids, the present invention addresses the challenge of providing instructions for a standardized and at least partially automated workflow method that can effectively manage various grid scenarios while reducing reliance on operator expertise and manual interventions, these instructions being stored on a non-transitory computer-readable storage medium.
The invention solves this problem through a non-transitory computer-readable storage medium according to claim 15. The same advantages as initially explained for the inventive computer-implemented method apply analogously.

The following paragraphs describe a preferred example embodiment of the inventive method.

In grid management systems, various cases can arise that hinder the system's full functionality, necessitating tailored solutions to address these challenges, such as outages, overload and maintenance scenarios.

In such instances, solutions are typically devised by operators who possess extensive experience. These solutions are often highly customized and operator-specific. They are inherently complex, comprising multiple steps, for example isolating the affected area, providing temporary power supply, fixing faults, and restoring energization. However, relying on operator expertise on complex solutions introduces certain vulnerabilities:
- The heavy reliance on operator decisions introduces a human factor that can cause issues and may lead to delays in executing steps.
- Sequential steps may not be accurately processed due to vulnerabilities arising from operator shift, which disrupt the transfer of critical information between each step.
- The difficulty in finding highly experienced operators is increasing.
- As the number of customers in grid systems increases, the complexity of managing these systems also grows.

Traditionally, grid operators have relied heavily on their expertise and manual interventions to address outage and maintenance cases within grid systems. This approach involves a high level of operator involvement, especially in identifying faults, isolating affected areas, and restoring power during unplanned outages.
Historically, the technology required for real-time data collection, processing, and automated decision-making was not as advanced or affordable. Reliable sensors, communication networks, and computing power are crucial for automation but have only recently reached the level of sophistication and cost-effectiveness needed for widespread implementation.

Automation requires accurate, real-time data to function effectively. Many older grid systems lack the necessary infrastructure for comprehensive monitoring and data acquisition. Without adequate data, it is difficult to implement automated fault detection, isolation, and restoration processes.

The operator tries to resolve any cases in the system by examining the grid and conducting various analyses based on their experience. The entire solution is controlled by operators, who must make numerous decisions at each step to successfully achieve the intended outcomes. Each step relies heavily on human intervention to be executable.

In the event of an unplanned outage in low-voltage systems, operators must quickly identify the fault location. This involves manual fault detection, isolation of the affected areas, and, if possible, temporarily energizing unaffected areas to maintain service continuity. The restoration process involves ensuring safety and coordinating repairs.

The operator's knowledge and experience play a crucial role in interpreting the data and making informed decisions to maintain or restore normal operations.

As a solution, the invention proposes the implementation of a BPMN (Business Process Model and Notation) powered workflow to streamline and standardize the resolution of various cases such as unplanned outages, overload cases, and other situations. The goal is to ensure that each step which is represented by subprocesses in BPMN domain in the resolution process is executed in a precise and predefined sequence, thereby minimizing errors, enhancing efficiency, and ensuring the reliability of grid operations.

This approach leverages common solutions for different types of cases, represented by top-level BPMN processes that include subprocesses for major actions. Each subprocess is individual and only responsible of limited scope of its own purpose. Different combination of the subprocesses provides a solution specific to different case types.

In a case of unplanned outage, general approach to solve the case consists of following steps: Confirm Case: Initial acknowledgment of the detected issue.

Isolate Area: Calculation and execution of actions to isolate the affected area.
Supply Temporarily: Calculation and execution of actions to provide temporary energization to the isolated area.

Fix Fault: Acknowledgment of the issue being resolved.
Restore Energization: Calculation and execution of actions to restore normal energization. Outage Resolved: Final acknowledgment of the issue resolution.

Non-limiting and non-exhaustive examples are described with reference to the following figures. For better explanation of the invention, the following schematic representations show:
- Figure 1: an exemplary workflow for managing an unplanned outage in a grid system, and
- Figure 2: an exemplary workflow for a maintenance process in a grid management system.

The following description sets forth exemplary aspects of the present disclosure. It should be recognized, however, that such description is not intended as a limitation on the scope of the present disclosure. Rather, the description also encompasses combinations and modifications to those exemplary aspects described herein.

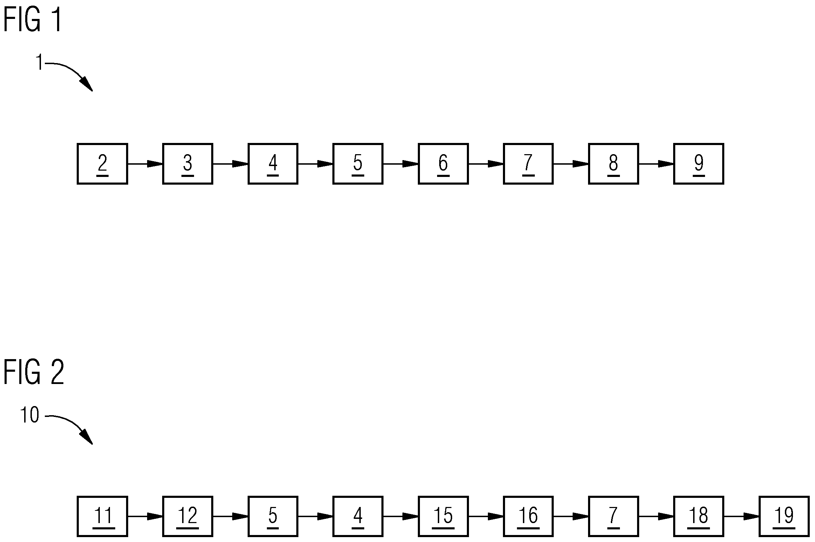

Figure 1 illustrates a first exemplary method 1 for managing an unplanned outage in a grid system using a BPMN (Business Process Model and Notation) workflow. The workflow begins with an unplanned outage start event 2, which initiates the process. The first step in the workflow is to confirm case 3, where the system or an operator acknowledges and verifies the occurrence of an outage.

Following case confirmation, the workflow proceeds to isolate area 4. This subprocess involves automated calculations to determine the necessary actions for isolating the affected area of the grid. The system may consider factors such as the location of the fault, network topology, and available switching options to minimize the impact on customers.

Once the affected area is isolated, the workflow moves to supply temporarily 5. This subprocess involves automated calculations to determine the best method for providing temporary power to the isolated area. The system may consider available resources, load priorities, and network constraints to optimize the temporary supply solution.

The next step in the workflow is to fix fault 6, which is not explicitly shown in Figure 1 but is implied as part of the resolution process. This subprocess may involve dispatching maintenance crews, coordinating repairs, and monitoring the progress of fault resolution.

After the fault is fixed, the workflow proceeds to restore energization 7. This subprocess involves automated calculations to determine the necessary actions for safely restoring power to the previously isolated area. The system may consider factors such as load balancing, voltage regulation, and synchronization requirements.

The final step in the workflow is outage resolved 8, where the system or an operator confirms that the outage has been successfully addressed and normal grid operations have been restored. The workflow concludes with a case closed event 9, signifying the completion of the unplanned outage management process.

The individual steps of the process can be described in more detail as follows:
Start Event: Detection of an issue on the grid initiates the process.
   Confirm Case:
      - Action Required: Operator acknowledgment.
      - Outcome: The issue is confirmed, and the workflow proceeds.
   Isolate Area:
      - Algorithm: Automated calculation of necessary actions to isolate the affected area.
      - Action Required: Operator executes the calculated actions, such as opening breakers.
      - Outcome: The affected area is isolated to ensure safety and prevent further damage. Supply Temporarily:
      - Algorithm: Automated calculation of actions to temporarily energize the isolated area.
      - Action Required: Operator executes the calculated actions, such as closing breakers.
      - Outcome: Temporary power is supplied to the isolated area to maintain service continuity.
   Fix Fault:
      - Action Required: Operator acknowledgment of the issue being fixed.
      - Outcome: The issue is resolved, allowing the workflow to proceed to the restoration phase.
   Restore Energization:
      - Algorithm: Automated calculation of reverse actions performed during isolation and temporary supply steps.
      - Action Required: Operator executes the reverse actions, such as closing breakers.
      - Outcome: Normal power supply is restored to the previously affected area.
   Outage Resolved:
      - Action Required: Operator acknowledgment of the resolution.
      - Outcome: The issue is officially resolved, and the process is completed.
End Event: Marks the successful completion of the entire process.

In another scenario, such as maintenance (described in figure 2), the solution differs but still reuses some of the subprocesses from other case solutions. For example, in a maintenance scenario, the subprocesses "Supply Temporarily," "Isolate Area," and "Restore Energization" are also utilized, as they are in the case of an unplanned outage.

Figure 2 depicts a second exemplary method 10 for a maintenance process in a grid management system. The workflow begins with a start maintenance event 11, indicating the initiation of a planned maintenance activity. The first step in this workflow is to activate case 12, where the system or an operator formally initiates the maintenance process.

Following case activation, the workflow includes the supply temporarily 5 subprocess, which is also present in the unplanned outage workflow. This reuse of subprocesses demonstrates the modular and efficient nature of the BPMN-powered workflow system.

The next step in the maintenance workflow is isolate area 4, another subprocess shared with the unplanned outage workflow. This further illustrates the versatility and reusability of key subprocesses across different grid management scenarios.

After area isolation, the workflow proceeds to install RTU 15, where a Remote Terminal Unit is installed in the isolated area. This subprocess may involve automated calculations to determine optimal placement and configuration of the RTU.

Following RTU installation, the workflow includes test RTU 16, where the newly installed unit is verified for proper functionality and integration with the grid management system.

Once the RTU is successfully tested, the workflow moves to restore energization 7, another subprocess shared with the unplanned outage workflow. This step ensures that power is safely restored to the area where maintenance was performed.

The final step in the maintenance workflow is close case 18, where the system or an operator confirms the successful completion of the maintenance activity. The workflow concludes with a case closed event 19, signifying the end of the maintenance process.

Both Figure 1 and Figure 2 demonstrate the standardized and repeatable nature of the BPMN-powered workflow system, as well as the reusability of key subprocesses across different grid management scenarios. This approach allows for efficient handling of various grid management cases while maintaining consistency and reducing development effort.

A number of implementations have been described. Nevertheless, it will be understood that various modifications may be made without departing from the spirit and scope of the disclosure. Accordingly, other implementations are within the scope of the following claims.

## Claims

1. A computer-implemented method for controlling an electric power grid, comprising the step:
providing, by a workflow module, several workflows (1,10) comprising subprocesses (3-8,15,16,18), each subprocess (3-8,15,16,18) representing a data processing task,
**characterized in** the step that
at least one subprocess (4,5,7) is used in different workflows (1,10).

2. The computer-implemented method of claim 1, **characterized in that** each workflow (1,10) and its subprocesses (3-8,15,16,18) are represented graphically by the workflow module, so that a user can combine the subprocesses (3-8,15,16,18) to create novel workflows.

3. The computer-implemented method of any preceding claim, **characterized in that** automated calculations are performed, by a grid control module, for determining necessary actions in at least some of the subprocesses (3-8,15,16,18).

4. The computer-implemented method of any preceding claim, **characterized in that** the automated calculations include determining actions for isolating areas (4) of the grid affected by an outage and supplying temporary power (5).

5. The computer-implemented method of any preceding claim, **characterized in that** the workflows (1,10) include safeguards to prevent incorrect operator execution of calculated actions.

6. The computer-implemented method of any preceding claim, **characterized in that** the workflows (1,10) are adaptable to unexpected complications or deviations during the resolution process.

7. The computer-implemented method of any preceding claim, **characterized in that** the workflows (1,10) integrate with existing grid management infrastructure and databases.

8. The computer-implemented method of any preceding claim, **characterized in that** the method further comprises maintaining and updating a knowledge base of common solutions and subprocesses (3-8,15,16,18) over time.

9. The computer-implemented method of any preceding claim, **characterized in that** the workflow (1,10) allows for customization for different grid operators or regions.

10. The computer-implemented method of claim 3, **characterized in that** the necessary actions are used, by the grid control module, to control the electric power grid by sending control signals to at least one of the following controllable devices: transformers with adjustable on-load tap changers, switchgear, controllable loads, controllable generators, capacitor banks, connected distributed energy resources with flexibility of load and/or generation.

11. The computer-implemented method of any preceding claim, **characterized in that** operator acknowledgment for execution of actions is required at predefined points in the workflows (1,10).

12. The computer-implemented method of any preceding claim, **characterized in that** the workflow (1,10) is implemented using a Business Process Modelling approach.

13. The computer-implemented method of any preceding claim, **characterized in that** the subprocesses (3-8,15,16,18) include at least one of: confirming a case, isolating an affected area, supplying temporary power, fixing a fault, and restoring energization.

14. A system for controlling an electric power grid, comprising:
a workflow module configured to provide several workflows (1,10) comprising subprocesses (3-8,15,16,18), each subprocess (3-8,15,16,18) representing a data processing task,
**characterized in that**
at least one subprocess (4,5,7) is used in different workflows (1,10).

15. A non-transitory computer-readable storage medium storing instructions that, when executed by a processor, cause the processor to perform a method according to any of the claims 1 to 13.
